# EUROPEAN PATENT APPLICATION

(11) **EP 4 653 323 A1**
(43) Date of publication of application: **26.11.2025**
(21) Application number: 24177505.5
(22) Date of filing: 22.05.2024
(51) Int. Cl.: B64D 45/00

(54) **FLIGHT DATA COLLECTION SYSTEM AND METHOD FOR FILTERING AIRCRAFT CONDITION MONITORING SYSTEM REPORTS**

(71) Applicant: AIRBUS Operations GmbH, 21129 Hamburg (DE)
(72) Inventor: Lindenau, Olaf, Hamburg (DE); Pounde, Iain, Hamburg (DE)

(57) **Abstract**

A flight data collection system, FDCS, (10) for an aircraft (A) includes a flight data acquisition unit, FDAU, (12) configured to collect flight data (FD) from aircraft and avionics components (11) on-board of the aircraft (A) and to tabulate the collected flight data (FD) as real-time flight reports (FR), and an aircraft communication and reporting system, ACARS, management system (15) coupled to the FDAU (12) and configured to transmit the real-time flight reports (FR) generated by the FDAU (12) as either air-to-ground or ground-to-ground communication (GR) to ground-based systems (20). The FDAU (12) comprises an aircraft condition monitoring system, ACMS, (13) configured to monitor and process flight data (FD) from the aircraft and avionics components (11). The ACMS (13) comprises a report filter device (14) configured to identify spurious data in the recorded flight data of the ACMS (13) and to filter the real-time flight reports (FR) output to the ACARS management system (15) based on the identified spurious data.

## Description

### TECHNICAL FIELD OF THE INVENTION

The invention relates to aircraft condition monitoring systems (ACMS) implemented in flight data collection systems (FDCS). The invention further relates to an aircraft having a flight data collection system with an aircraft condition monitoring system. Moreover, the invention relates to methods for filtering aircraft condition monitoring system reports.

### TECHNICAL BACKGROUND

Airlines may use on-board aircraft condition monitoring systems (ACMS) in order to monitor the aircraft by evaluating flight and systems data collected by the ACMS. The ACMS monitors multiple important systems of the aircraft, such as the engines, auxiliary power units, cabin systems and similar. Additionally, the ACMS aids in troubleshooting, data recordings, aircraft performance monitoring and special investigations. To that end, the ACMS takes into account several thousand flight data items in real-time.

Aircraft maintenance and inspections may typically be scheduled in fixed intervals and after predetermined thresholds of component lifetime. To be more flexible and to ensure safe operation, aircraft maintenance and inspections may also be scheduled based on reports generated by the ACMS. Since such maintenance and inspections operations can be costly and time-consuming, it is desirable to ensure that aircraft maintenance and inspections are necessary, targeted and efficient.

The document EP 2 551 805 A1 discloses methods for detecting the performance of an aircraft based on customized messages. The document EP 3 039 497 A1 discloses methods for monitoring an aircraft engine for predicting maintenance operations.

### SUMMARY OF THE INVENTION

One of the objects of the invention is to find more efficient solutions for scheduling aircraft maintenance and inspections based on flight data reports generated by an aircraft condition monitoring system (ACMS).

This and other objects are achieved by means of a flight data collection system (FDCS) with an aircraft condition monitoring system having the features of claim 1, an aircraft having the features of claim 8 and a method for filtering aircraft condition monitoring system reports having the features of claim 9.

According to a first aspect of the invention, a flight data collection system (FDCS) includes a flight data acquisition unit, FDAU, configured to collect flight data from aircraft and avionics components on-board of the aircraft and to process, store and output the collected flight data as real-time flight reports, and an aircraft communication and reporting system, ACARS, coupled to the FDAU and configured to transmit the real-time flight reports received from the FDAU as either flight-ground or ground-ground communication to ground-based systems. The FDAU comprises an aircraft condition monitoring system, ACMS, configured to monitor and process flight data acquired as flight data from the aircraft and avionics components. The ACMS comprises a report filter device configured to identify spurious data in the recorded flight data of the ACMS and to filter the real-time flight reports output to the ACARS management system based on the identified spurious data.

According to a second aspect of the invention, an aircraft comprises a flight data collection system according to the first aspect of the invention.

According to a third aspect of the invention, a method for filtering aircraft condition monitoring system reports, in particular reports generated by an aircraft condition monitoring system (ACMS) included in a flight data collection system (FDCS) according to the first aspect of the invention, involves the steps of: collecting, by a flight data acquisition unit, FDAU, flight data from aircraft and avionics components on-board of an aircraft; monitoring and processing, by an aircraft condition monitoring system, ACMS, flight data from the aircraft and avionics components as real-time flight reports; transmitting, by an aircraft communication and reporting system, ACARS, management system coupled to the ACMS, the real-time flight reports received from the FDAU either air-to-ground or ground-to-ground communication to ground-based systems; identifying, by a report filter device in the ground-based systems, spurious data in the recorded flight data of the ACMS; and filtering, by the report filter device, the real-time flight reports based on the identified spurious data.

In some embodiments of the first aspect of the invention, the FDCS may further comprise a flight data storage unit. In several embodiments thereof, the FDAU may further be configured to transmit storage reports for storing the filtered real-time flight reports in the flight data storage unit.

In various embodiments of the first aspect of the invention, the FDCS may further comprise a cockpit printer. In a number of embodiments thereof, the ACMS may further be configured to provide filtered stored flight reports to the cockpit printer.

In various embodiments of the first aspect of the invention, the FDCS may further comprise a multifunction condition and display unit, MCDU. In a number of embodiments thereof, the ACMS may further be configured to provide the flight data to the MCDU.

In several embodiments of the first aspect of the invention, the aircraft and avionics components may be configured to monitor signals supplied from a variety of transducers and sensors distributed throughout the aircraft and to provide digital data representative of the flight and system states of the aircraft based upon the transducer and sensor inputs.

In various embodiments of the first aspect of the invention, the ACARS management system may include an inbuilt communication transceiver.

In some embodiments of the first aspect of the invention, the report filter device may be configured to identify spurious data in the recorded flight data of the ACMS by performing differential checks on the recorded flight data, taking into account data/signal source properties, data consistencies and/or flight mechanical relationships.

In several embodiments of the third aspect of the invention, the aircraft and avionics components may be configured to monitor signals supplied from a variety of transducers and sensors distributed throughout the aircraft and to provide digital data representative of the flight and systems states of the aircraft based upon the transducer and sensor inputs.

In a number of embodiments of the third aspect of the invention, the step of identifying spurious data in the recorded flight data of the ACMS may include performing differential checks on the recorded flight data, taking into account data/signal source properties, data consistencies and/or flight mechanical relationships.

Advantageous configurations and developments will emerge from the further dependent claims and from the description with reference to the figure. The advantageous configurations and developments may be combined with one another as desired where expedient. Further possible configurations, developments and implementations of the invention also encompass combinations, which are not explicitly mentioned, of features of the invention described above or below with regard to the exemplary embodiments. A person skilled in the art here will in particular also add individual aspects as improvements or additions to the respective basic form of the present invention.

### BRIEF SUMMARY OF THE DRAWINGS

The present invention will be discussed in more detail below on the basis of the exemplary embodiments shown in the schematic figures. In the figures:
Fig. 1 depicts a flight data collection system (FDCS) for an aircraft according to some embodiments of the invention.
Fig. 2 depicts a further flight data collection system (FDCS) for an aircraft according to some alternative embodiments of the invention.
Fig. 3 illustrates an aircraft including one of the flight data collection systems (FDCS) of Fig. 1 or 2 according to some embodiments of the invention.
Fig. 4 shows a schematic flowchart of the steps of a method for filtering aircraft condition monitoring system (ACMS) reports according to some embodiments of the invention.

The appended figures are intended to provide improved understanding of the embodiments of the invention. They illustrate embodiments and serve, in conjunction with the description, for the explanation of principles and concepts of the invention. Other embodiments, and many of the stated advantages, will emerge with regard to the drawings. The elements of the drawings are not necessarily shown true to scale relative to one another. Direction-indicating terminology such as, for instance, "top", "bottom" "left", "right", "above" "below", "horizontal", "vertical", "front", "rear" and similar indications are used only for explanatory purposes and do not serve to restrict the generality to specific configurations as shown in the figures.

In the figures of the drawing, elements, features and components that are identical, functionally identical and of identical action are denoted in each case by the same reference signs unless stated otherwise.

### DESCRIPTION OF EXEMPLARY EMBODIMENTS

The following examples and embodiments are described in the context of passenger aircraft, however, it should be noted that analogous consideration apply with respect to data networks of network nodes in other transport vehicles, such as, but not limited to, cargo aircraft, helicopters, passenger trains, road vehicles, watercraft or similar transport machines.

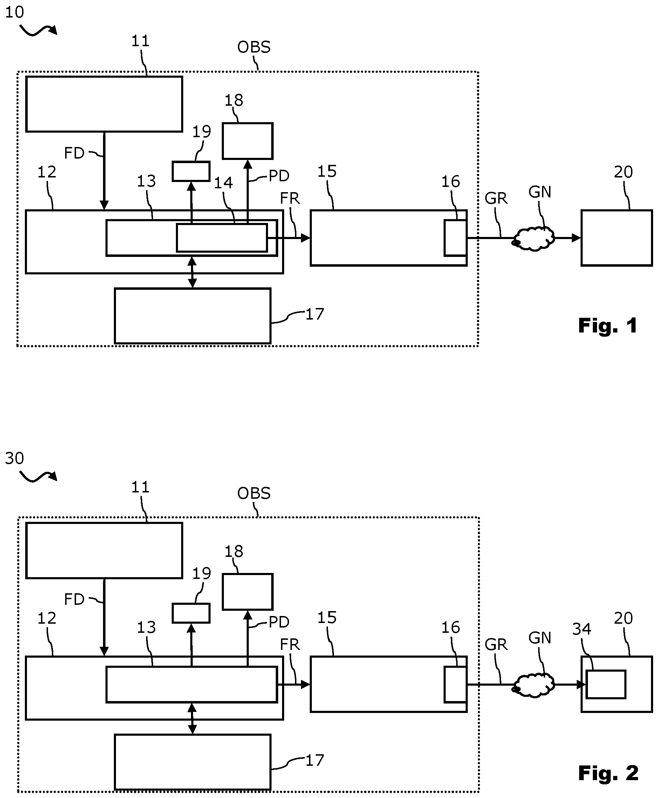

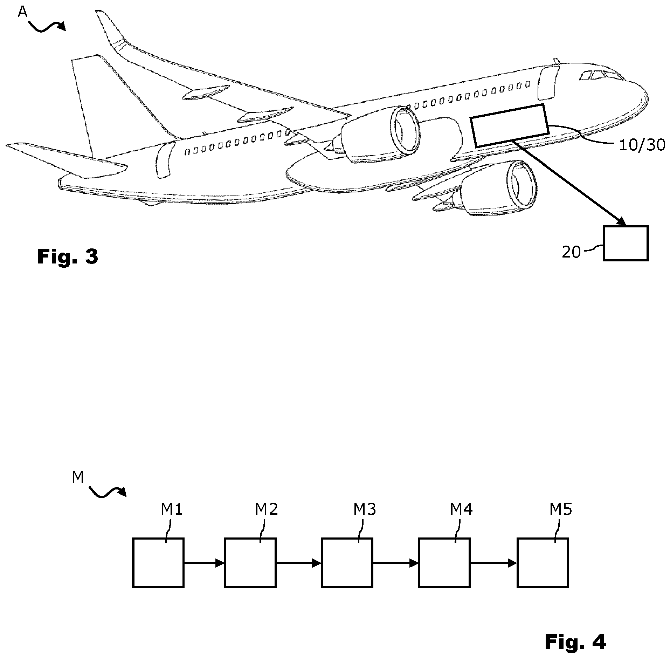

Figures 1 and 2 illustrate two implementations of a flight data collection system (FDCS) 10 and 30, respectively on board of an aircraft, such as for example the aircraft A as exemplarily illustrated in Figure 3. The FDCS 10 and 30 comprise multiple on-board systems OBS on board of an aircraft. The FDCS 10 and 30 include a flight data acquisition unit (FDAU) 12 which is configured to collect flight data FD from various aircraft and avionics components, collectively referred to as components 11. For example, the collected flight data FD may include parameters in line with the U.S. Federal Aviation Regulations (FAR) §121.344 needed for maintenance and engineering.

The FDAU 12 includes an aircraft condition monitoring system (ACMS) 13 which is configured to monitor and process flight data acquired as flight data FD from the aircraft and avionics components 11. The aircraft and avionics components monitor signals supplied from a variety of transducers and sensors distributed throughout the aircraft and provide digital data representative of the flight and systems states of the aircraft based upon such transducer and sensor inputs.

In order to obtain an overview over the current flight, for example in line with the requirements of FAR §121.344, the ACMS 13 collates and tabulates the flight data FD to generate real-time ACMS flight reports FR. The generated ACMS flight reports FR are transmitted to an aircraft communication and reporting system (ACARS) management system 15. The ACARS management system 15, in turn, may for example use an inbuilt communication transceiver 16 to transmit the ACMS flight reports FR in real-time via a communication link GR as air-to-ground or ground-to-ground communication via any suitable communication network GN to systems 20 external to the aircraft A, for example ground-based systems 20. The communication link GR may for example be a digital data link that is created in a satellite communication network and/or a ground-based network. Additionally, the FDAU 12 may also transmit storage reports for storing the ACMS flight reports FR in a flight data storage unit 17 on board of the aircraft A.

The flight data may also be provided by the ACMS 13 to a pilot interface, such as a multifunction condition and display unit (MCDU) 18. The MCDU 18 may for example display real-time parameters PD for maintenance and piloting on an interface display (not explicitly shown) to the cockpit crew. Moreover, the ACMS 13 may be connected to a cockpit printer 19 that may receive filter stored flight reports FR for creating carbon copies thereof.

In the implementation of the FDCS 10 of Figure 1, the FDAU 12 includes a report filter device 14 as component of the ACMS 13. The report filter device 14 is therefore part of the on-board systems OBS on board of the aircraft. The report filter device 14 is configured to identify spurious data in the recorded flight data of the ACMS 13 and to filter the real-time flight reports FR output to the ACARS management system 15 based on the identified spurious data.

In the alternative implementation of the FDCS 30 of Figure 2, the report filter device 34 is part of one or more of the systems 20 external to the aircraft A. In this implementation, the ACARS management system 15 transmits all of the real-time flight reports FR received by the FDAU 12 as either air-to-ground or ground-to-ground communication GR to systems 20 external to the aircraft A. Then, in the report filter device 34, spurious data in the recorded flight data of the ACMS 13 is identified and the real-time flight reports FR are filtered based on the identified spurious data.

Figure 4 schematically illustrates a schematic flowchart of the steps of a method M for filtering aircraft condition monitoring system (ACMS) reports. The method M may in particular be implemented using the flight data collection systems (FDCS) 30 of Figure 2, for example in an aircraft A as depicted in Figure 3.

In a first step M1, a flight data acquisition unit (FDAU) 12 collects flight data FD from aircraft and avionics components 11 on-board of an aircraft A. In a second step M2, an aircraft condition monitoring system (ACMS) 13 of the FDAU 12 monitors and processes flight data FD from the aircraft and avionics components 11 as real-time flight reports, for example by tabulating the collected flight data FD.

An aircraft communication and reporting system (ACARS) management system 15 coupled to the ACMS 13 receives all the real-time flight reports FR from the FDAU 12 and transmits them as either air-to-ground or ground-to-ground communication GR to systems 20 external to the aircraft A, for example ground-based systems 20, in a third step M3. The communication link GR may for example be a digital data link that is created in a satellite communication network and/or a ground-based network.

A report filter device 34 in the ground-based systems 20 is used in a fourth step M4 to identify spurious data in the recorded flight data of the ACMS 13. This may for example be achieved by performing differential checks on the recorded flight data, taking into account data/signal source properties, data consistencies and/or flight mechanical relationships. Then, in a fifth step M5, the report filter device 34 filters the real-time flight reports FR based on the identified spurious data.

By filtering the ACMS reports, spurious and unreliable reports may be filtered before being processed any further for purposes of maintenance and inspections. That way, unnecessary actions, such as for example costly grounding of the aircraft for undue or unwarranted inspections and maintenance work, may be avoided.

In order to improve the stringency of the representation, various features were combined in one or more examples in the detailed description above. However, it should be clear in this case that the description above is only of an illustrative and in no way restrictive nature. It is used to cover all alternatives, modifications and equivalents of the various features and exemplary embodiments. Many other examples will be immediately and directly clear to a person skilled in the art on the basis of his technical knowledge in view of the description above.

The exemplary embodiments were chosen and described in order to be able to represent the principles on which the invention is based and their possible uses in practice in the best possible manner. As a result, experts may optimally modify and use the invention and its various exemplary embodiments for the intended purpose. In the claims and the description, the terms "containing" and "having" are used as neutral concepts for the corresponding term "comprising". Furthermore, use of the terms "a", "an" and "one" is not intended to fundamentally exclude a plurality of features and components described in such a way.

## Claims

1. Flight data collection system, FDCS, (10) for an aircraft (A), the FDCS (13) comprising:
a flight data acquisition unit, FDAU, (12) configured to collect flight data (FD) from aircraft and avionics components (11) on-board of the aircraft (A) and to process, store and output the collected flight data (FD) as real-time flight reports (FR); and
an aircraft communication and reporting system, ACARS, management system (15) coupled to the FDAU (12) and configured to transmit the real-time flight reports (FR) received from the FDAU (12) as either air-to-ground or ground-to-ground communication (GR) to ground-based systems (20),
wherein the FDAU (12) comprises an aircraft condition monitoring system, ACMS, (13) configured to monitor and process flight data acquired as flight data (FD) from the aircraft and avionics components (11), the ACMS (13) comprising a report filter device (14) configured to identify spurious data in the recorded flight data of the ACMS (13) and to filter the real-time flight reports (FR) output to the ACARS management system (15) based on the identified spurious data.

2. FDCS (10) according to claim 1, further comprising a multifunction condition and display unit, MCDU, (18), the ACMS (13) being further configured to provide the flight data to the MCDU (18).

3. FDCS (10) according to claim 1 or 2, further comprising a cockpit printer (19), the ACMS being further configured to provide filtered stored flight reports (FR) to the cockpit printer (19).

4. FDCS (10) according to one of the claims 1 to 3, further comprising a flight data storage unit (17), the FDAU (12) being further configured to transmit storage reports for storing the filtered real-time flight reports (FR) in the flight data storage unit (17).

5. FDCS (10) according to one of the claims 1 to 4, wherein the aircraft and avionics components (11) are configured to monitor signals supplied from a variety of transducers and sensors distributed throughout the aircraft (A) and to provide digital data representative of the flight and system states of the aircraft (A) based upon the transducer and sensor inputs.

6. FDCS (10) according to one of claims 1 to 5, wherein the ACARS management system (15) includes an inbuilt communication transceiver (16).

7. FDCS (10) according to one of claims 1 to 6, wherein the report filter device (14) is configured to identify spurious data in the recorded flight data of the ACMS (13) by performing differential checks on the recorded flight data, taking into account data/signal source properties, data consistencies and/or flight mechanical relationships.

8. Aircraft (A), comprising a flight data collection system, FDCS, (10) according to one of claims 1 to 7.

9. Method (M) for filtering aircraft condition monitoring system, ACMS, reports, the method (M) comprising:
collecting (M1), by a flight data acquisition unit, FDAU, (12), flight data (FD) from aircraft and avionics components (11) on-board of an aircraft (A);
monitoring and processing (M2), by an aircraft condition monitoring system, ACMS, (13), flight data (FD) from the aircraft and avionics components (11) as real-time flight reports (FR);
transmitting (M3), by an aircraft communication and reporting system, ACARS,
management system (15) coupled to the ACMS (13), the real-time flight reports (FR) received by the FDAU (12) as either air-to-ground or ground-to-ground communication (GR) to ground-based systems (20);
identifying (M4), by a report filter device (34) in the ground-based systems (20), spurious data in the recorded flight data of the ACMS (13); and
filtering (M5), by the report filter device (34), the real-time flight reports (FR) based on the identified spurious data.

10. Method (M) according to claim 9, wherein the aircraft and avionics components (11) are configured to monitor signals supplied from a variety of transducers and sensors distributed throughout the aircraft (A) and to provide digital data representative of the flight of the aircraft (A) based upon the transducer and sensor inputs.

11. Method (M) according to one of the claims 9 and 10, wherein the identifying (M4) of spurious data in the recorded flight data of the ACMS (13) includes performing differential checks on the recorded flight data, taking into account data/signal source properties, data consistencies and/or flight mechanical relationships.
